# EUROPÄISCHE PATENTSCHRIFT

(11) **EP 0 801 241 B1**
(45) Veröffentlichungstag und Bekanntmachung des Hinweises auf die Patenterteilung: **09.06.1999**
(21) Anmeldenummer: 97105977.9
(22) Anmeldetag: 11.04.1997
(51) Int. Cl.: F16D 3/50

(54) **Elastische, axial- und winkel-bewegliche Kupplung**
Flexible coupling allowing an axial and angular movement
Accouplement élastique permettant un mouvement axial et angulaire

(30) Priorität: 11.04.1996 DE 19614267
(43) Veröffentlichungstag der Anmeldung: 15.10.1997
(73) Patentinhaber: ATEC-Weiss GmbH & Co. KG, D-48691 Vreden (DE)
(72) Erfinder: Weiss, Rudolf, 48691 Vreden (DE)
(74) Vertreter: Cohausz & Florack

(56) Entgegenhaltungen:
- DE-A- 4 312 518
- DE-A- 4 315 861
- GB-A- 447 027
- US-A- 2 181 183

## Beschreibung

Die vorliegende Erfindung betrifft eine elastische, axial- und winkelbewegliche Kupplung zur Verbindung zweier sich drehender Maschinenteile, mit mindestens einem elastischen Kupplungsteil und mindestens einem drehsteifen Ganzstahlkupplungsteil, wobei der drehsteife Kupplungsteil mit dem elastischen Kupplungsteil und dem einen Maschinenteil jeweils axial- und winkelbeweglich verbunden ist.

Kupplungen dieser Art, bei denen es sich um eine Kombination einer Ganzstahlkupplung mit einer elastischen Kupplung handelt, sind grundsätzlich bekannt.

Beispielsweise ist aus der DE 43 12 518 A1 eine Wellenkupplung zur Drehmomentübertragung zwischen zwei drehbaren Anschlußteilen bekannt, die eine mit dem einen Anschlußteil verbundene flexible Membranscheibe aufweist, welche über am Umfang verteilte, jeweils auf einem achsparallelen Mitnehmerbolzen angeordnete Gummibuchsen an einem mit dem anderen Anschlußteil verbundene Kupplungsscheibe angeschlossen ist. Die Mitnehmerbolzen sind dabei an der Membranscheibe oder an der Kupplungsscheibe in der Weise axial verschiebbar aufgenommen, daß der Umfangsrand der Membranscheibe gegenüber der Kupplungsscheibe axial verlagerbar ist.

Diese bekannte Kupplung hat jedoch wie andere bisher bekannte Kupplungen dieser Art den Nachteil, daß der elastische Kupplungsteil insbesondere einen Radialversatz und gegebenenfalls auch einen Winkelversatz der zu verbindenden drehbaren Maschinenteile ausgleichen soll. Hierdurch werden die elastischen Kupplungselemente aber übermäßig beansprucht. Ein relativ schneller Verschleiß ist die Folge.

Auch kann eine Aufnahme radialer, winkliger und axialer Verlagerungen durch den elastischen Kupplungsteil zu hohen Reaktionskräften führen, da die in den bisher bekannten elastischen Kupplungen aus Gründen der Wartungsfreiheit überwiegend eingesetzten Elastomere bei Druckbelastung verhältnismäßig steif sind.

Aus der US-A-2 181 183 ist eine elastische Kupplung mit einem elastischen Kupplungsteil bekannt, der am Umfang verteilt angeordnete Gummibolzen aufweist. Der elastische Kupplungsteil ist winkelbeweglich mit einem Wellenring verbunden, so daß die Gummibolzen gegebenenfalls einen Winkelversatz der zu verbindenden Wellenteile ausgleichen müssen und demzufolge bei Drehung der Wellenteile abwechselnd mit hoher Frequenz einer Druck- bzw. Zugbelastung unterworfen werden. Somit weist auch diese bekannte Kupplung die oben genannten Nachteile auf.

Aufgabe der vorliegenden Erfindung ist es, eine elastische, axial- und winkelbewegliche Kupplung der eingangs genannten Art zu schaffen, die einen Axial-, Radial- und Winkelversatz der angeschlossenen drehbaren Maschinenteile ausgleicht, ohne hierdurch die elastischen Kupplungselemente zusätzlich zu beanspruchen, denen ausschließlich die Aufgabe zukommen soll, Drehmomentstöße herabzusetzen sowie Drehschwingungen zu dämpfen.

Diese Aufgabe wird erfindungsgemäß dadurch gelöst, daß der elastische Kupplungsteil auf dem anderen Maschinenteil und gegenüber diesem um die Rotationsachse verdrehbar, aber ohne Winkelbeweglichkeit bezüglich einer Achse senkrecht zur Rotationsachse radial geführt ist.

Zwischen dem elastischen Kupplungsteil und dem drehsteifen Kupplungsteil ist somit eine Aufgabentrennung vollzogen, die zu einer längeren Lebensdauer der elastischen Kupplungselemente beiträgt. Ferner wirkt die erfindungsgemäße Lösung dem Auftreten unerwünschter Reaktionskräfte entgegen, indem eine durch Aufnahme von Wellenverlagerungen bedingte Versteifung der elastischen Kupplungselemente vermieden wird.

Gemäß einer vorteilhaften Ausgestaltung der erfindungsgemäßen Lösung ist der elastische Kupplungsteil mit dem anderen Maschinenteil radial durch einen Kunststoff verbunden. Hierdurch läßt sich in zuverlässiger Weise eine verdrehbare und exakte radiale Führung des elastischen Kupplungsteils auf dem anderen Maschinenteil erzielen.

Eine andere vorteilhafte Ausgestaltung besteht darin, daß der Kunststoff eine Buchse bildet, die formschlüssig in zwei Nuten eingreift, wobei die eine Nut in dem anderen Maschinenteil und die andere Nut in einem Flansch des elastischen Kupplungsteils die andere Nut in einem Flansch des elastischen Kupplungsteils ausgebildet ist. Diese Ausgestaltung stellt sicher, daß eine Axialverschiebung innerhalb der radialen Führung weitgehend verhindert wird.

Die Elastizität der erfindungsgemäßen Kupplung wird vorzugsweise durch Elastomerelemente bewirkt. Elastomerelemente haben den Vorteil, wartungsfrei zu sein.

Um die dämpfende Wirkung der erfindungsgemäßen Kupplung zu erhöhen, kann der elastische Kupplungsteil doppelt ausgeführt sein, und zwar indem der drehsteife Kupplungsteil über einen ersten elastischen Kupplungsteil mit dem ersten Maschinenteil und über einen zweiten elastischen Kupplungsteil mit dem zweiten Maschinenteil verbunden ist.

Nach einer weiteren vorteilhaften Ausgestaltung ist vorgesehen, daß der drehsteife Kupplungsteil zwei Lamellenpaketkränze aufweist, die über eine Zwischenhülse miteinander verbunden sind. Ein solches Kupplungsteil ist ebenfalls wartungsfrei.

Nachfolgend wird die Erfindung anhand von Ausführungsbeispielen mit Bezug auf die beigefügte Zeichnung näher erläutert. Darin zeigen:
- Fig. 1: einen Längsschnitt einer erfindungsgemäßen Kupplung mit einer Zweigelenk-Ganzstahlkupplung als drehsteifem Kupplungselement und einer bzw. zwei Bolzenkupplungen als elastischen Kupplungsteilen;
- Fig. 2: eine Schnittdarstellung der mit einer Nabe verbundenen Bolzenkupplung gemäß Fig. 1; und
- Fig. 3: eine Stirnseitenansicht der Nabe gemäß Fig. 2.

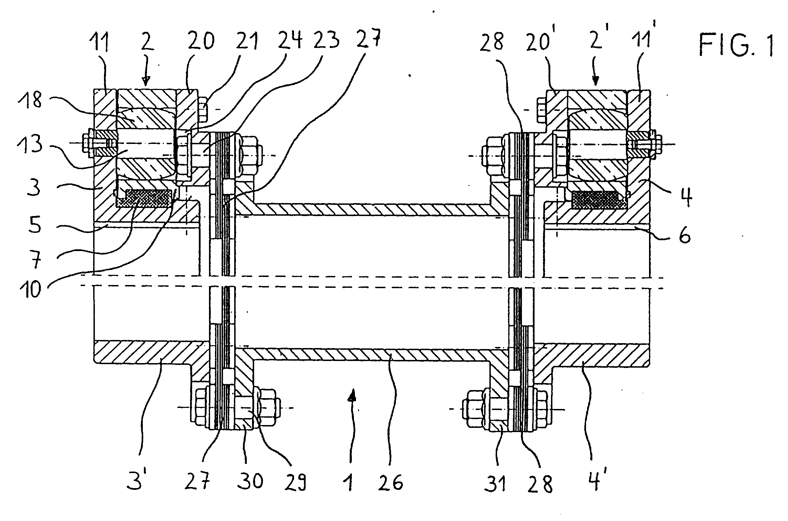

In Fig. 1 sind drei verschiedene Kombinationen einer erfindungsgemäßen Kupplung dargestellt, die eine drehsteife, axial- und winkelbewegliche Ganzstahlkupplung 1, mindestens eine elastische Bolzenkupplung 2 und zwei Naben 3 und 4 umfaßt, die jeweils mit einer Nut 5 bzw. 6 versehen sind und über eine Paßfeder mit einer Antriebswelle bzw. einer Abtriebswelle verbindbar sind. Die Bolzenkupplung 2 kann sowohl einseitig auf der Antriebs- oder Abtriebsseite als auch doppelseitig angeordnet sein.

In jedem Fall besitzt die Bolzenkupplung 2 eine exakte radiale Führung auf der jeweiligen Nabe. Hierzu wird ein Kunststoff 7 verwendet, der einen relativ geringen Scherwiderstand aufweist und die elastische Bolzenkupplung 2 auf der Nabe 3 bzw. 4 drehbar führt. Der Kunststoff 7 bildet eine Buchse, die formschlüssig in Ringnute 8 und 9 eingreift, welche in der Nabe 3 bzw. in einem Flansch 10 der Bolzenkupplung 2 ausgebildet sind. Eine axiale Verschiebung der Bolzenkupplung 2 gegenüber der Nabe 3 wird durch die Nut-Feder-Verbindung weitgehend verhindert. Bei dem Kunststoff 7 kann es sich beispielsweise um Polyurethan handeln, das in die Nuten 8 und 9 eingegossen wird. Anstelle einer durchgehenden Buchse können als radiale Führung auch Segmente einer solchen Buchse vorgesehen sein.

Die Nabe 3 weist ferner einen Flansch 11 auf, der mit zehn gleichmäßig auf einem Teilkreis verteilt angeordneten Bohrungen 12 versehen ist. In diesen Bohrungen ist jeweils ein Haltebolzen 13 gelagert, der ein verjüngtes Einsteckende 14 mit einer axialen Gewindebohrung 15 aufweist und mittels einer Schraube 16 sowie einer Unterlegscheibe 17 an der Nabe 3 befestigt ist. Auf den Haltebolzen 13 sind zylindrische Gummipuffer 18 gelagert, die in Bohrungen 19 eingesetzt sind, welche in dem gegenüber der Nabe 3 verdrehbaren Flansch 10 ebenfalls auf einem Teilkreis gleichmäßig verteilt angeordnet sind.

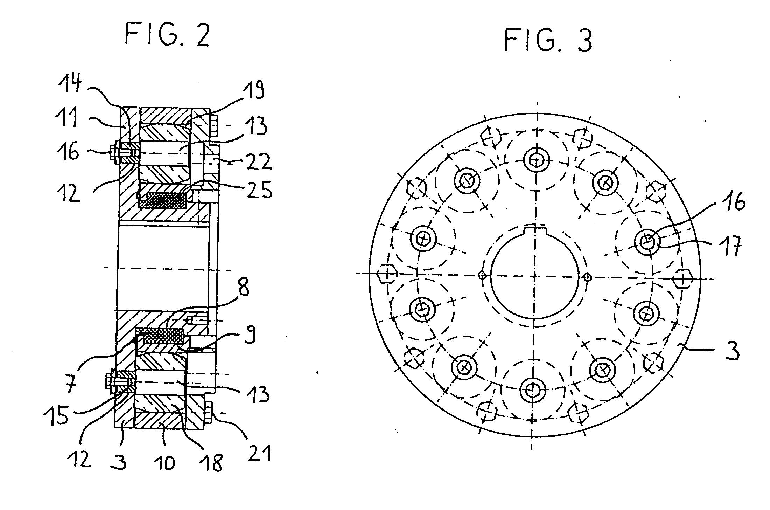

An dem elastischen Kupplungsteil 2 ist über einen Kupplungsflansch 20 die drehsteife Ganzstahlkupplung 1 befestigt. Der Kupplungsflansch 20 ist mit Bohrungen versehen, die auf einem äußeren bzw. einem inneren Teilkreis angeordnet sind. Die außenliegenden Bohrungen dienen der Aufnahme von Schraubbolzen 21, die jeweils in in dem Flansch 10 des elastischen Kupplungsteils 2 ausgebildete Gewindebohrungen eingeschraubt sind. Die innenliegenden Bohrungen 22 dienen hingegen der Aufnahme von Schraubbolzen 23, die an einem ersten Gelenk des drehsteifen Ganzstahlkupplungsteils 1 angeschraubt sind. Die Köpfe dieser Schraubbolzen 23 sind in Zylindersenkungen 24 der innenliegenden Bohrungen 22 angeordnet, so daß der Kupplungsflansch 20 in kompakter Form an dem elastisch gelagerten Flansch 10 der Bolzenkupplung 2 angeschlossen ist. Insbesondere in Fig. 2 ist zu erkennen, daß der Flansch 10 der Bolzenkupplung einen ringförmigen Absatz 25 aufweist, dessen Durchmesser geringfügig kleiner ist als der Innendurchmesser des Kupplungsflansches 20. Durch diesen Absatz 25 wird der Kupplungsflansch 20 gegenüber dem elastischen Kupplungsteil 2 zentriert.

Zum Ausgleich eines Radialversatzes weist der drehsteife Ganzstahlkupplungsteil 1 zwei Gelenke auf, die über eine Zwischenhülse 26 miteinander verbunden sind. Die Gelenke bestehen jeweils aus einem Lamellenpaketkranz 27 bzw. 28, der wechselseitig mit Schraubbolzen 23 und 29 an den Kupplungsflanschen befestigt ist. Sofern nur ein elastischer Kupplungsteil 2 vorgesehen ist, wird einer der beiden Kupplungsflansche 30 oder 31 der Zwischenhülse 26 über einen Lamellenpaketkranz 27bzw. 28 an einem Kupplungsflansch einer der Naben 3' oder 4' befestigt (vgl. untere Bildhälfte in Fig. 1). Bei einer doppelseitigen Anordnung werden die Kupplungsflansche 30 und 31 der Zwischenhülse 26 dagegen jeweils über einen Lamellenpaketkranz 27 bzw. 28, einen zwischengeordneten Kupplungsflansch 20 bzw. 20' und einen elastischen Kupplungsteil 2 bzw. 2' an dem Kupplungsflansch 11 bzw. 11' der jeweiligen Nabe 3 bzw. 4 befestigt (vgl. obere Bildhälfte in Fig. 1).

Die Erfindung ist nicht auf die vorstehend beschriebenen Ausführungsbeispiele beschränkt. Vielmehr sind Abwandlungen denkbar, die von dem Erfindungsgedanken auch bei abweichender Gestaltung Gebrauch machen. So können beispielsweise anstelle der dargestellten Gummipuffer 18 auch ähnliche auf Druck belastete Elastomere eingesetzt werden.

## Patentansprüche

1. Elastische, axial- und winkelbewegliche Kupplung zur Verbindung zweier sich drehender Maschinenteile (3, 4), mit mindestens einem elastischen Kupplungsteil (2) und mindestens einem drehsteifen Ganzstahlkupplungsteil (1), wobei der drehsteife Kupplungsteil (1) mit dem elastischen Kupplungsteil (2) und dem einen Maschinenteil (4) jeweils axial- und winkelbeweglich verbunden ist,
**dadurch gekennzeichnet,** daß
der elastische Kupplungsteil (2) auf dem anderen Maschinenteil (3) und gegenüber diesem um die Rotationsachse verdrehbar, aber ohne Winkelbeweglichkeit bezüglich einer Achse senkrecht zur Rotationsachse radial geführt ist.

2. Elastische Kupplung nach Anspruch 1, **dadurch gekennzeichnet,** daß der elastische Kupplungsteil (2) mit dem anderen Maschinenteil (3) durch einen Kunststoff (7) radial verbunden ist.

3. Elastische Kupplung nach Anspruch 2, **dadurch gekennzeichnet,** daß der Kunststoff eine Buchse (7) bildet, die formschlüssig in zwei Nuten (8, 9) eingreift, wobei die eine Nut (8) in dem anderen Maschinenteil (3) und die andere Nut (9) in einem Flansch (10) des elastischen Kupplungsteils (2) ausgebildet ist.

4. Elastische Kupplung nach einem der vorangehenden Ansprüche, **dadurch gekennzeichnet,** daß dessen Elastizität durch Elastomerelemente (18) bewirkt ist.

5. Elastische Kupplung nach einem der vorangehenden Ansprüche, **dadurch gekennzeichnet,** daß der elastische Kupplungsteil doppelt ausgeführt ist, indem der drehsteife Kupplungsteil (1) über einen ersten elastischen Kupplungsteil (2') mit dem einen Maschinenteil (4) und über einen zweiten elastischen Kupplungsteil (2) mit dem anderen Maschinenteil (3) verbunden ist.

6. Elastische Kupplung nach einem der vorangehenden Ansprüche, **dadurch gekennzeichnet,** daß der drehsteife Kupplungsteil (1) zwei Lamellenpaketkränze (27, 28) aufweist, die über eine Zwischenhülse (26) miteinander verbunden sind.

## Claims

1. An elastic coupling allowing axial and angular movement for connecting two rotating machine parts (3, 4), with at least one elastic coupling part (2) and at least one torsionally-rigid all-steel coupling part (1), wherein the torsionally-rigid coupling part (1) is connected to both the elastic coupling part (2) and the one machine part (4) in a way allowing axial and angular movement,
**characterized** in that the one elastic coupling part (2) is twistable on the other machine part (3) and in respect of the axis of rotation, but is radially guided without angular movement in respect of an axis perpendicular to the axis of rotation.

2. An elastic coupling according to claim 1, characterised in that the elastic coupling part (2) is radially connected to the other machine part (3) by a plastic material (7).

3. An elastic coupling according to claim 2, characterised in that the plastic material (7) forms a bushing which positively engages two grooves (8, 9), the one groove (8) being provided in the other machine part (3) and the other groove (9) being provided in a flange (10) of the elastic coupling part (2).

4. An elastic coupling according any one of the preceding claims, characterised in that its elasticity is brought about by elastomer elements (18).

5. An elastic coupling according to any one of the preceding claims, characterised in that the elastic coupling part is constructed in a dual arrangement by linking the torsionally-rigid coupling part (1) to the one machine part (4) by way of a first elastic coupling part (2') and to the other machine part (3) by way of a second elastic coupling part (2).

6. An elastic coupling according to any one of the preceding claims, characterised in that the torsionally-rigid coupling part (1) comprises two multi-plate stack rims (27, 28) which are connected to each other by way of an intermediate sleeve (26).

## Revendications

1. Accouplement élastique mobile axialement et angulairement pour relier deux pièces de machine (3, 4) qui tournent, comportant au moins une partie d'accouplement élastique (2) et au moins une partie d'accouplement tout en acier (1) rigide en torsion, la partie d'accouplement rigide en torsion (1) étant reliée à la partie d'accouplement élastique (2) et à l'une pièce de machine (4) de manière à permettre respectivement une mobilité axiale et une mobilité angulaire,
caractérisé en ce que la partie d'accouplement élastique (2) peut tourner sur l'autre pièce de machine (3) et, par rapport à cette dernière, autour de l'axe de rotation, mais est guidée radialement sans mobilité angulaire par rapport à un axe perpendiculaire à l'axe de rotation.

2. Accouplement élastique selon la revendication 1,
caractérisé en ce que la partie d'accouplement élastique (2) est reliée radialement à l'autre pièce de machine (3) au moyen d'une matière plastique (7).

3. Accouplement élastique selon la revendication 2,
caractérisé en ce que la matière plastique forme une douille (7) qui s'engage selon une liaison par formes complémentaires dans deux rainures (8, 9), l'une rainure (8) étant formée dans l'autre pièce de machine (3) et l'autre rainure (9) étant formée dans une bride (10) de la partie d'accouplement élastique (2).

4. Accouplement élastique selon l'une des revendications précédentes,
caractérisé en ce que son élasticité est produite par des éléments élastomères (18).

5. Accouplement élastique selon l'une des revendications précédentes,
caractérisé en ce que la partie d'accouplement élastique est agencée d'une manière double, par le fait que la partie d'accouplement (1) rigide en torsion est reliée par l'intermédiaire d'une première partie d'accouplement élastique (2') à l'une pièce de machine (4) et par l'intermédiaire d'une seconde partie d'accouplement élastique (2) à l'autre pièce de machine (3).

6. Accouplement élastique selon l'une des revendications précédentes,
caractérisé en ce que la partie d'accouplement (1) rigide en torsion comporte deux couronnes (27, 28) de paquet de lamelles, qui sont reliées entre elles par l'intermédiaire d'une douille intercalaire (26).
